# EUROPEAN PATENT APPLICATION

(11) **EP 0 835 683 A1**
(43) Date of publication of application: **15.04.1998**
(21) Application number: 95931417.0
(22) Date of filing: 14.09.1995
(51) Int. Cl.: B01D 53/26

(54) **DESICCANT CARTRIDGE AND DESICCATOR**

(30) Priority: 16.09.1994 JP 221517/94
(71) Applicant: KOMATSU LTD., Minato-ku Tokyo 107 (JP)
(72) Inventor: IMAMURA, Toshihide Technical Institute of, Hiratsuka-shi, Kanagawa-ken 254 (JP); KADOTANI, Kanichi Technical Institute of, Hiratsuka-shi, Kanagawa-ken 254 (JP)
(74) Representative: Enskat, Michael Antony Frank
(86) International application number: JP9501838
(87) International publication number: WO9608304

(57) **Abstract**

A moisture absorbent filled body comprises a hollow yarn structure composed by weaving non-organic fibers, a moisture absorbent filling in the hollow yarn structure and an electric wire as a heater disposed along a longitudinal direction of the hollow yarn structure. A dehumidifier comprises: a moisture absorbent filled body which comprises a hollow yarn structure formed by weaving non-organic fibers, a moisture absorbent filling in the hollow yarn structure and an electric wire as a heater disposed along a longitudinal direction of the hollow yarn structure; a case which has inlet and outlet openings for air communication and in which a plurality of the moisture absorbent filled body are arranged with both ends thereof being closed and with a space from each other; and an electric power source connected to the electric wire of the moisture absorbent filled body.

## Description

### TECHNICAL FIELD

The present invention relates to a hollow member for dehumidification for obtaining dried air having a low dew point by removing moisture from an air containing the moisture and also relates to a dehumidifier therefor, and more particularly, to a hollow member for dehumidification formed in combination of a hollow yarn structure formed by weaving fibers and a moisture absorbent such as zeolite, silica gel, alumina gel, or silica-alumina gel and to a dehumidifier therefor.

### BACKGROUND ART

A conventional example of such hollow member for dehumidification and dehumidifier is disclosed in Japanese Utility Model Laid-open Publication No. HEI 3-19531.

In this conventional example, a moisture absorbent is arranged outside a hollow yarn and an air containing moisture is flowed through the hollow yarn to absorb the moisture by the moisture absorbent through the wall of the hollow yarn. The moisture absorbent absorbing the moisture is then regenerated by exposing it to a dried air or vacuum.

As mentioned above, according to the conventional hollow yarn and the dehumidifier, since moisture pressure difference between the moisture absorbent absorbing the moisture and the dried air or vacuum is utilized for regenerating the moisture absorbent absorbing the moisture, the regeneration coefficient is not good. Further, it is impossible to regenerate the moisture absorbent which absorbs excessive moisture through the exposure to the dried air, and in a certain case, the moisture absorbent in a dehumidifier is to be exchanged with a new one, requiring an increased running cost, being a problem.

The present invention was conceived in view of the above problems and aims to provide a hollow member for dehumidification and a dehumidifier capable of improving a regeneration coefficient of a moisture absorbent in the hollow member for dehumidification and the dehumidifier and using the moisture absorbent for a long time to reduce a running cost thereof, and as a result, obtaining a dried air with reduced cost.

### DISCLOSURE OF THE INVENTION

To achieve the above object, according to one embodiment of the present invention, there is provided a hollow member for dehumidification comprising a hollow yarn structure composed by weaving non-organic fibers, a moisture absorbent filling in the hollow yarn structure and an electric wire as a heater disposed along a longitudinal direction of the hollow yarn structure.

According to another embodiment of the present invention, there is provided a dehumidifier comprising:
a hollow member for dehumidification which comprises a hollow yarn structure composed by weaving non-organic fibers, a moisture absorbent filling in the hollow yarn structure and an electric wire as a heater disposed along a longitudinal direction of the hollow yarn structure;
a case which has inlet and outlet openings for air communication and in which a plurality of the hollow members for dehumidification are arranged with both ends thereof being closed and with a space from each other; and
an electric power source connected to the electric wire of the hollow member for dehumidification.

According to a further embodiment of the present invention, there is provided a dehumidifying system comprising at least two sets of humidifiers performing dehumidifying and regeneration functions alternatively, each comprising:
a hollow member for dehumidification which comprises a hollow yarn structure composed by weaving non-organic fibers, a moisture absorbent filling in the hollow yarn structure and an electric wire as a heater disposed along a longitudinal direction of the hollow yarn structure;
a case which has inlet and outlet opening for air communication and in which a plurality of the hollow members for dehumidification are arranged with both ends thereof being closed and with a space from each other; and
an electric power source connected to the electric wire of the hollow member for dehumidification.

According to the above respective embodiments, since the moisture absorbent absorbing the moisture is heated, through direct contacting, by the electric wire disposed inside the moisture absorbent or contacted thereto, the moisture absorbent can be effectively regenerated in comparison with a conventional indirect contact regeneration process using a dried air. The usable life time of the moisture absorbent can be expanded by effectively regenerating the moisture absorbent.

Furthermore, since the usable life time of the moisture absorbent can be expanded, the unning cost of the dehumidifier using the moisture absorbent can be reduced, and as a result, the dried air can be obtained with reduced cost.

Furthermore, it is possible to construct a dehumidifying system in which the moisture absorbing operation and the regeneration operation are alternatively performed by using at least two sets of the dehumidifiers each having the structure described above, whereby only the dried air can be continuously supplied.

### BRIEF DESCRIPTION OF THE DRAWINGS

The present invention will be understood more clearly from the following detailed descriptions and accompanying drawings representing embodiments of the present invention. Further, it is to be noted that the embodiments shown in the accompanying drawings do not intend to specify the invention and are for the easy understanding of the invention.

In the accompanying drawings:
Fig. 1 is a view showing arrangement of one embodiment of a hollow member for dehumidification according to the present invention and a first embodiment of a dehumidifier using the hollow member.
Fig. 2 is a view showing an arrangement of a dehumidifying system in which two sets of dehumidifiers shown in Fig. 1 are disposed in combination.
Fig. 3 is a perspective view showing another embodiment of the hollow member for dehumidification according to the present invention.
Fig. 4 is a view showing arrangement of a second embodiment of a dehumidifier according to the present invention.

### PREFERRED EMBODIMENTS FOR EMBODYING THE INVENTION

A hollow member for dehumidification and a dehumidifier using the same according to preferred embodiments of the present invention will be described hereunder with reference to the accompanying drawings.

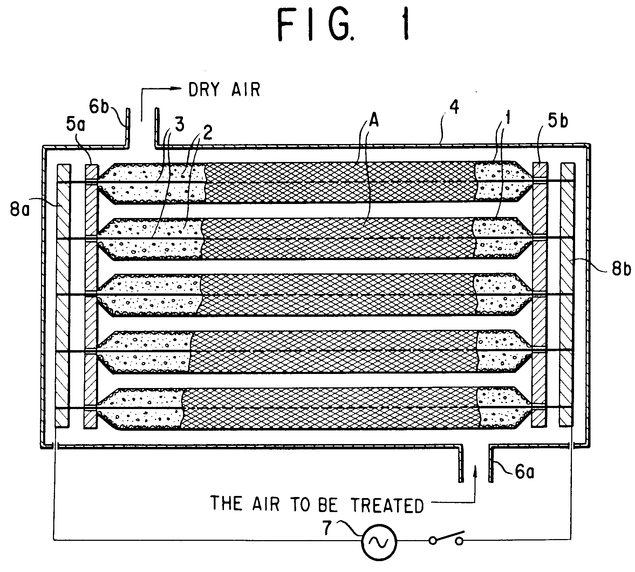

Fig. 1 represents a first embodiment of a dehumidifier according to the present invention, in which a letter A denotes a hollow member for dehumidification composed of a hollow yarn structure 1 formed by weaving non-organic filament yarns. In the hollow yarn structure 1, a moisture absorbent 2 such as zeolite, silica gel, alumina gel or silica-atumina gel fills, and an electric wire 3 as a heater is enclosed in the central portion of the hollow yarn structure 1. A plurality of hollow members A for dehumidification are accommodated in a case 4 so as to cross between support pedestals 5a and 5b with both ends of them being closed, respectively. The hollow members A for dehumidification are separated from each other in location in a manner such that an air introduced into the case 4 through an air port 6a formed to one side wall of the case flows in a gap between the respective hollow members A for dehumidification and then flows out through an air port 6b formed to another one side wall of the case 4.

Electrodes 8a and 8b are arranged behind the support pedestals 5a and 5b and connected to a power source 7 and both the ends of the electric wires 3 for the hollow members A for dehumidification are connected to the electrodes, respectively. The support pedestals 5a and 5b are formed of an insulation material.

In the arrangement described above, when an air containing moisture to be treated is supplied into the case 4 through one of the air ports 6a, the air to be treated flows inside the case 4, while contacting the outer peripheral surface of the hollow member A for dehumidification, and then discharged through the other one of the air ports 6b. During this flow of the air in the case 4, the moisture content in the air to be treated penetrates through the wall of the hollow yarn structure 1 and is then absorbed by the moisture absorbent 2 in the hollow yarn structure 1, thus removing the moisture, whereby the air to be treated is discharged as dehumidified dry air from the case 4.

According to this operation, the moisture absorbent 2 is gradually increased in its absorbed moisture amount, and at a time when the absorbed moisture amount reaches a certain value, a current is conducted to the electric wires 3 disposed in the respective hollow yarn structures 1. In this operation, since the electric wires 3 act as heaters, the moisture contents absorbed by the moisture absorbent 2 are evaporated and discharged outside the hollow yarn structures 1, and accordingly, the air discharged at this time from the case 4 has high temperature and high moisture content.

As described above, since the moisture absorbent 2 which absorbs the moisture is heated through the direct contact by the electric wire 3 disposed in each moisture absorbent 2, the moisture absorbent 2 can be regenerated effectively in comparison with the conventional indirect regeneration process by the dried air. Moreover, because of the effective regeneration of the moisture absorbent 2, the usable life time of the moisture absorbent 2 can be expanded.

Furthermore, because of the expanded life time of the moisture absorbent 2, the unning cost of a dehumidifier using such moisture absorbent can be reduced, thus obtaining a dried air with reduced cost.

Through the operations mentioned above, the air discharged from the case 4 alternately takes a dried air state or an air state having high temperature and high moisture in a certain cycle. Accordingly, in a case where only the dried air is to be continuously needed, it may be necessary to arrange at least two sets of the dehumidifiers each having the structure mentioned above and use them alternately.

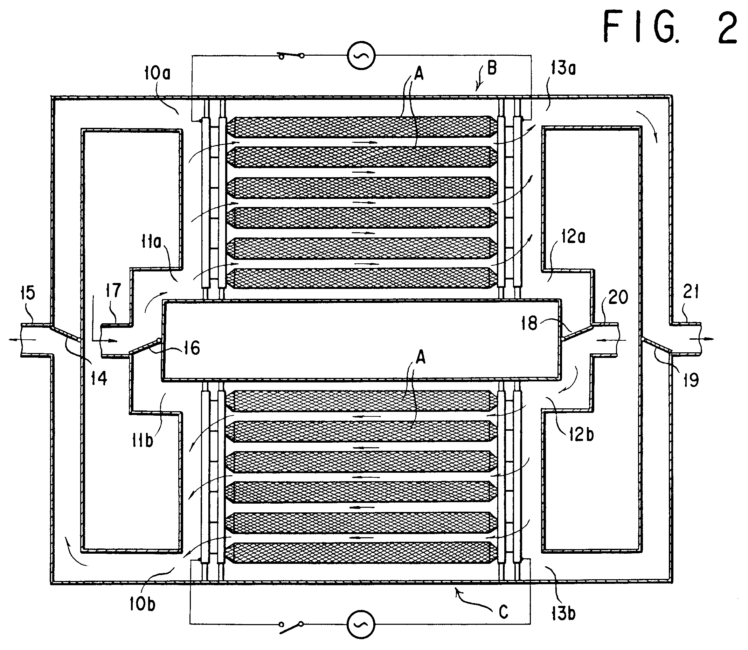

Fig. 2 shows one example of a dehumidifying system using two sets of the structures of the first embodiment mentioned above, in which first and second dehumidifiers B and C are arranged side by side. Dried air outlets 10a and 10b and regenerated air inlets 11a and 11b are formed to one sides of both the dehumidifiers B and C, and inlets 12a and 12b for the air to be treated and the regenerated air outlets 13a and 13b are formed to the other sides of both the dehumidifiers B and C. Further, both the dried air outlets 10a and 10b are selectively connected to a dried air blowing tube 15 through a first valve 14. The regenerated air inlets 11a and 11b are selectively connected to a regenerated air suction tube through a second valve 16. In the like manner, the inlets 12a and 12b for the air to be treated are selectively connected to an air suction tube 20 for the air to be treated through a third valve 18, and the regenerated air outlets 13a and 13b are selectively connected to a regenerated air blowing tube 21 through a fourth valve 19.

According to the arrangement described above, when the respective valves 14, 16, 18 and 19 take their opened or closed states shown in Fig. 2, the first dehumidifier B is performing the regeneration and the second dehumidifier C is performing the dehumidifying treatment.

That is, the air to be treated sucked by a fan, not shown, through the air suction tube 20 is guided into the second dehumidifier C through the third valve 18, and in the second dehumidifier C, the air is dehumidified by the moisture absorbent disposed in the hollow member A for dehumidification passes the dried air outlet 10b and is then guided as dried air to the dried air blowing tube 15 through the first valve 14. In this operation, the electric wires 3 in the respective hollow members A for dehumidification are not conducted, and the regenerated air inlet 11b and the regenerated air outlet 13b are both closed.

On the other hand, in the first dehumidifier B, the electric wires 3 in the respective hollow members A for dehumidification are conducted and the regenerated air is guided therein through the regenerated air inlet 11a. Accordingly, the moisture absorbent 2 in the respective hollow members A for dehumidification in the first dehumidifier B are heated and regenerated, and the regenerated air passes the regenerated air outlet 13a and is then discharged as high temperature and high moisture air through the regenerated air blowing tube 21.

As mentioned above, the dried air can be continuously blown through the dried air blowing tube 15 by performing the regeneration functions of both the dehumidifier B and C through the alternative switching of the respective valves.

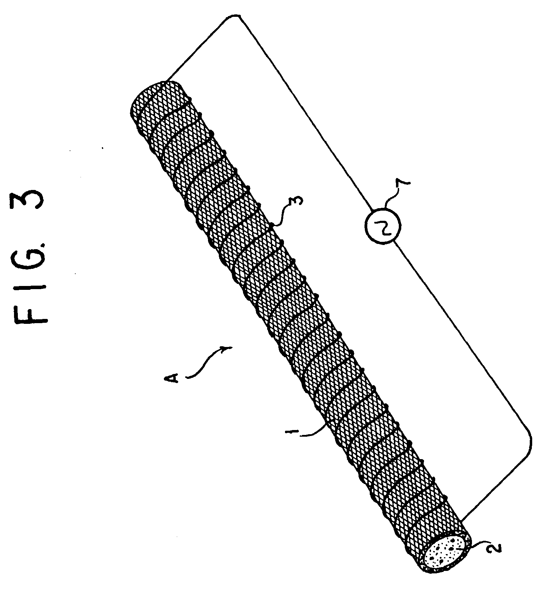

Further, although, in the one example of the hollow member A for dehumidification of the structure described above, the electric wire 3 as the heater together with the moisture absorbent 2 is axially arranged in the hollow yarn structure 1, the electric wire 3 may be wound up around the outer periphery of the hollow yarn structure 1 as shown in Fig. 3 as an alternative example. Furthermore, the electric wire 3 may be woven in the hollow yarn structure 1, though not shown. The winding or weaving of the electric wire in such alternative examples will be made throughout the entire length of the hollow yarn structure 1 or by a certain extent along the longitudinal direction thereof.

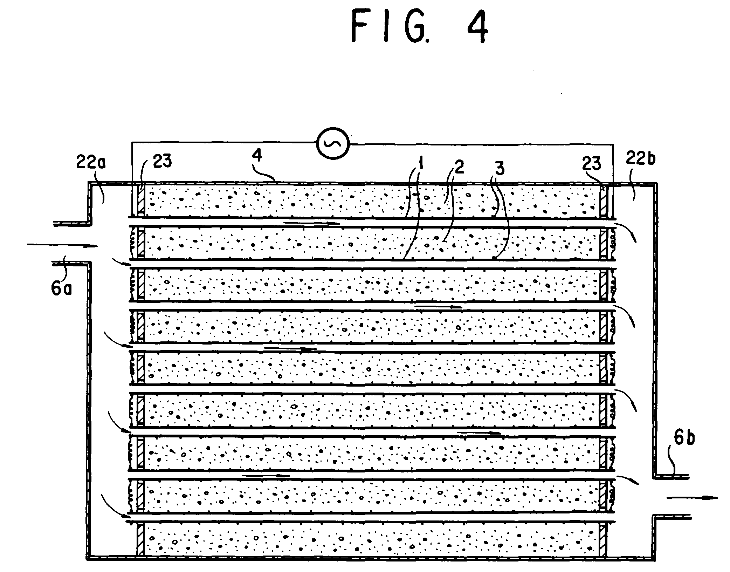

Further, in the first embodiment and the dehumidifying system, although the moisture absorbent 2 are enclosed in the hollow yarn structures 1, the moisture absorbent 2 may be filled up in spaces outside the hollow yarn structures 1 in the case 4 of a dehumidifier of a second embodiment shown in Fig. 4. In this embodiment, the electric wires 3 as the heaters will be wound up around the outsides of the hollow yarn structures 1 or woven therein. Both the ends of the respective hollow yarn structures 1 are supported by supporting members 23, 23 and are opened to spaces 22a and 22b having the air ports 6a and 6b, respectively.

In this embodiment, the air to be treated, which is flowed through one of the air ports 6a, passes inside the respective hollow yarn structures 1 and is then discharged through the other one of the air ports 6b, and during this operation, the moisture content in the air to be treated is absorbed by the moisture absorbent 2 disposed outside the respective hollow yarn structures 1.

Further, when it is required to regenerate the moisture absorbent 2, the electric wires 3 are conducted.

In this embodiment, the supporting members 23, 23 supporting both the ends of the hollow yarn structures 1 and enclosing the moisture absorbent 2 therein may be formed of plate members or net members.

Furthermore, as like the first embodiment, it is possible to provide the dehumidifying system composed of at least two sets of dehumidifiers of the structure described above for alternatively performing the moisture absorption and the regeneration functions.

Although the present invention has been described with respect to exemplary embodiments thereof, it should be understood by those skilled in the art that the foregoing and various other changes, deletions and additions may be made thereto without departing from the scopes of the present invention. Therefore, the present invention should not be understood as limited to the specific embodiments described above but to include all possible embodiments which can be embody within a scope encompassed and equivalents thereof with respect to the features recited in the appended claims.

## Claims

1. A hollow member for dehumidification comprising a hollow yarn structure composed by weaving non-organic fibers, a moisture absorbent filling in the hollow yarn structure and an electric wire as a heater disposed along a longitudinal direction of the hollow yarn structure.

2. A hollow member for dehumidification according to claim 1, wherein said electric wire is disposed inside the hollow yarn structure.

3. A hollow member for dehumidification according to claim 1, wherein said electric wire is wound up around an outer periphery of the hollow yarn structure.

4. A hollow member for dehumidification according to claim 1, wherein said electric wire is woven in the hollow yarn structure.

5. A dehumidifier comprising:
a hollow member for dehumidification which comprises a hollow yarn structure composed by weaving non-organic fibers, a moisture absorbent filling in the hollow yarn structure and an electric wire as a heater disposed along a longitudinal direction of the hollow yarn structure;
a case which has inlet and outlet openings for air communication and in which a plurality of the hollow members for dehumidification are arranged with both ends thereof being closed and with a space from each other; and
an electric power source connected to the electric wires of the hollow members for dehumidification.

6. A dehumidifying system comprising at least two sets of dehumidifiers performing dehumidifying and regeneration functions alternatively, each comprising:
a hollow member for dehumidification which comprises a hollow yarn structure composed by weaving non-organic fibers, a moisture absorbent filling in the hollow yarn structure and an electric wire as a heater disposed along a longitudinal direction of the hollow yarn structure;
a case which has inlet and outlet openings for air communication and in which a plurality of the hollow members for dehumidification are arranged with both ends thereof being closed and with a space from each other; and
an electric power source connected to the electric wires of the hollow members for dehumidification.

7. A dehumidifier comprising:
a hollow yarn structure which is composed by weaving non-organic fibers and which is provided with an electric wire as a heater disposed along a longitudinal direction thereof;
a case which has inlet and outlet openings for air communication and in which a plurality of the hollow yarn structures are arranged with both ends thereof being opened to spaces communicating with the inlet and outlet openings and with a space from each other;
a moisture absorbent filling in a space outside the hollow yarn structure; and
an electric power source connected to the electric wire of the hollow yarn structure.

8. A dehumidifying system comprising at least two sets of dehumidifiers performing dehumidifying and regeneration functions alternatively, each comprising:
a hollow yarn structure which is composed by weaving non-organic fibers and which is provided with an electric wire as a heater disposed along a longitudinal direction thereof;
a case which has inlet and outlet openings for air communication and in which a plurality of the hollow yarn structures are arranged with both ends thereof being opened to spaces communicating with the inlet and outlet openings and with a space from each other;
a moisture absorbent filling in a space outside the hollow yarn structure; and
an electric power source connected to the electric wire of the hollow yarn structure.
